# EUROPEAN PATENT APPLICATION

(11) **EP 2 175 378 A1**
(43) Date of publication of application: **14.04.2010**
(21) Application number: 08017902.1
(22) Date of filing: 13.10.2008
(51) Int. Cl.: G06F 17/30

(54) **Provision of data stored in a memory card to a user device**

(71) Applicant: Vodafone Holding GmbH, 40213 Düsseldorf (DE)
(72) Inventor: Hoeksel, Sebastiaan, 6229 VN, Maastricht (NL); Koraichi, Najib, 6333 CT, Schimmert (NL)
(74) Representative: Jostarndt, Hans-Dieter

(57) **Abstract**

The invention relates to a method for providing data stored in least one memory card (102) to a user device (114). The method comprises the steps of: (i) connecting the memory card (102) to a host unit (110), which is connectable to the user device (114); (ii) determining in the host unit (110) that added data is stored in the memory card (102), said added data have not been transmitted to the user device (114); and (iii) reading the added data from the memory card (102) and transmitting the added data and/or information identifying the added data from the host unit (110) to the user device (114), if a data connection (116) between the user device (114) and the host unit (110) exists. Furthermore, the invention relates to a system for use in the method.

## Description

### Technical Field

The invention relates to memory cards, which can be temporarily connected to host devices. More specifically, the invention is related to a method and a system for providing data stored in at least one memory card to a user device.

### Background of the invention

Memory cards are integrated circuit (IC) cards including non-volatile memory and a controller, which controls the operation of the memory card. Such memory cards are used with personal computers (PCs), cellular telephones, personal digital assistants (PDAs), digital cameras, portable audio players and other host electronic devices for storage of data. A plurality of standards exists that specify different types of memory cards, such as, for example, SD (Secure Digital) cards, CF (Compact Flash) cards and MMCs (Multimedia Cards). A further example of a memory card, in the sense the term is used herein, is a USB (Universal Serial Bus) flash memory device.

Often, the memory card is used with a portable host device and stores data, which have been generated or received in the portable host device. For example, the memory card may be used in mobile communication device and stores data received by means of the mobile communication device or it stores photos and/or videos that have been generated by means of the mobile communication device.

However, the user may wish to have the data stored in the memory card available in another user device, such as, for example, a home PC of the user. For providing the data to the user device, the user may disconnect the memory card from the host device and may connect it to the user device. Then, the data can be transferred from the memory card to the user device. However, this is cumbersome for the user and requires that the user device disposes of an interface for connecting the memory card to the user device.

### Description of the invention

It is an object of the present invention to facilitate the provision of data stored in a memory card used with a host unit to another user device.

The object is achieved by a method according to claim 1 and by a system according to claim 14. Embodiments of the method and the system are given in the dependent claims.

According to a first aspect of the invention, a method for providing data stored in at least one memory card to a user device is provided. The method comprises the following steps:
- connecting the memory card to a host unit, which is connectable to the user device;
- determining in the host unit that added data is stored in the memory card, said added data have not been transmitted to the user device; and
- transmitting the added data and/or information identifying the added data from the host unit to the user device, if a data connection between the user device and the host unit exists.

According to a second aspect of the invention, a system for providing data stored in at least one memory card to a user device is suggested. The system comprises a host unit coupled to an interface means, said interface means being adapted to connect the host unit to the memory card. The system further comprises a managing unit included in the host unit, the managing unit being adapted to determine that added data is stored in the memory card, said added data have not been transmitted to the user device; and the managing unit being further adapted to transmit the added data and/or information identifying the added data to the user device, if a data connection between the user device and the host unit exists.

It is an advantage of the invention, that the data can be transferred to the user device using a data connection between the host unit and the user device. This disburdens the user from connecting the memory card to the user device in order to transfer the data to the user device. Moreover, the user device does not need to dispose of an interface means for connecting the user device to the memory card.

Furthermore, it is an advantage of the invention that the same data are not transferred to the user device repeatedly. This is achieved by determining added data and by transferring only the added to the user device.

The host unit may be any device that can be used with the memory card. In particular, the host unit may be a portable device. In one embodiment, the host unit is a mobile communication device to which the memory card is connected. The user device may be a PC of the user, such as, for example, a home PC. However, in principle, the user device can be any device that is connectable to the host unit via a data connection to receive data.

The data connection is preferably a data connection that is established for other purposes than the transfer of added data, or the data connection may be established automatically. Thus, an already provided data connection can be used for transferring the added data to the user device. For instance, the data connection may comprise a radio link between the host unit and the device, which is automatically established, when the host unit and the device are within the range of the radio link.

In one embodiment of the method and the system, at least one register is provided, said register identifying data that have been transmitted to the user device.

It is an advantage of this embodiment that by means of the register, it can be easily determined, which data have been added to the memory card.

A related embodiment of the method and the system comprises that it is determined that data stored in the memory card are added data, if said data is not identified in the register.

Preferably, the register is available in the host unit. In one embodiment of the method and the system, the register is stored in the host unit.

It is an advantage of this embodiment, that the host unit manages the register. If the host unit is a mobile communication device, the register may particularly be stored in a SIM card of the mobile communication device. Thus, the register can be made available in another host unit by connecting the SIM card to another host unit.

The SIM card may be a smartcard comprising a SIM (Subscriber Identity Module) according to the GSM (Global System for Mobile Communications), the SIM application being used to identify and/or authenticate a subscriber in a mobile communication network according to the GSM standard. However, the term SIM card, as used herein, is to be understood as including also smartcards comprising USIM (Universal Subscriber Identity Module) applications according to the UMTS (Universal Mobile Telecommunications System) standard or other applications providing authentication and/or identification functions in connection with a mobile communication network.

In a further embodiment of the method and the system, the register is stored in the memory card. It is an advantage of this embodiment that the register is physically assigned to the memory card. This facilitates the management of the register, in particular, if multiple memory cards are used with one host unit or even with multiple host units, which can be connected to the user device.

In one embodiment of the method and the system, the added data and/or information identifying the added data is transmitted to the user device, when it is realised that the data connection exists.

It is an advantage of this embodiment that the transfer of the added data and/or of the information identifying the added data can be initiated automatically, when it is determined that the data connection between the host unit and the user device exists. This is particularly useful, in case the data connection temporarily connects the host unit and the user device.

In a further embodiment of the method and the system, added data and/or information identifying added data is transmitted to the user device periodically.

This embodiment has the advantage that the transfer of added data and/ or information identifying added data can be done according to a predetermined time scheme. The time scheme may be configured by the user of the host unit and/or the user device. In particular, the user may specify the periodic time between the transfers.

One embodiment of the method and the system comprises that the information identifying the added data is transmitted to the user device at a first time and the added data is transferred to the user device at a second time later than the first time.

The information identifying the added data may comprise information, which allows the user to identify the data. For instance, this may be names of data files stored in the memory card. The data itself, i.e. the data content of files stored in the memory card, are preferably not included in the information identifying the added data.

The information identifying the added data has a smaller data volume than the data itself. Therefore, by providing only information identifying the added at first, the user device can be efficiently informed about added data, while the load of the data connection is kept low.

In a one embodiment of the method and the system, the added data is transmitted via the data connection with a lower priority than further data transmitted via the data connection.

It is an advantage of this embodiment that the added data itself can be transmitted to the user device, when no other data have to be transmitted to the user device with high priority. In particular, the added data may be transferred to the user device, when it is determined that a load of the data connection is low.

In a further embodiment of the method and the system, the added data is transmitted to the user device upon a receipt of a request in the host unit.

In particular, the user device may request the added data after having received the information identifying the added data. Here, the user may select added data to be requested using the information identifying the added data.

If the added data is transmitted to the user device upon a request of the user device, one embodiment of the method and the system provides that the added data is transmitted to the user device with a priority that is equal to or higher than the priority of other data transferred via the data connection. This allows transmitting requested added data to the user device particularly quickly.

The memory card may store data the user wants to protect against unauthorised access by third parties. Therefore, in one embodiment of the method and the system, the memory card allows the host unit to read the added data and/or the information identifying the data after a credential has been successfully verified in the memory card, the credential being provided to the memory card by the host unit.

In this embodiment, the memory card advantageously provides a security mechanism controlling access to the data stored in the memory card. The security mechanism grants access to the data after having successfully verified a credential provided by the host unit.

The credential may be securely stored in the host unit. If the host unit is a mobile communication device, the credential may particularly be stored in the SIM card of the mobile communication device. Here, the security mechanism already existing in the SIM card protects the credential from being accessed without permission.

In a further embodiment of the method and the system, at least part of the added data is stored in the memory card in an encrypted form, and the encrypted part of the added data is decrypted before it is transmitted to the user device, the decryption being made using a decryption key securely stored in the host unit.

In particular, this embodiment allows for securely storing data in a memory card, which does not dispose of a security mechanism of the type described before.

If the host unit is a mobile communication device, the decryption key may particularly be stored in the SIM card of the mobile communication device, the SIM card protecting the decryption key against unauthorised access.

The aforementioned and other aspects of the invention will also be apparent from and elucidated with reference to the embodiments described hereinafter making reference to the drawings.

### Brief description of the drawings

Reference will be made by way of example to the accompanying drawings in which

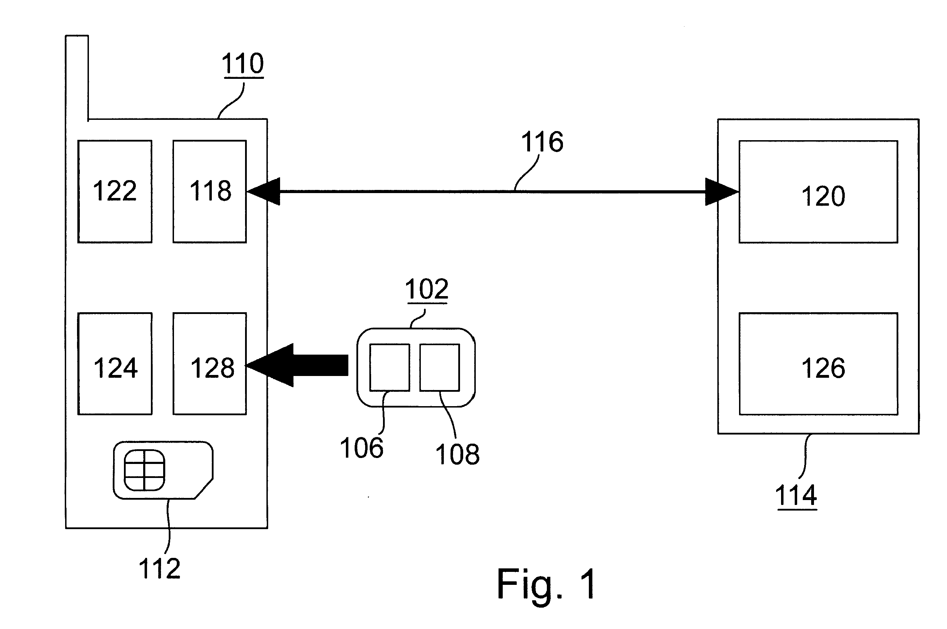

Fig. 1 is a schematic depiction of a system for providing data stored in a memory card to a user device.

### Detailed description of embodiments of the invention

Figure 1 schematically shows components of a system for providing data stored in a memory card 102 to a user device 114 of the memory card user. The memory card 102 can store any kind of data, such as, for example, music files, digital photos, videos or other documents of the user. Since the memory card 102 can be carried along by the user, it allows him to have the data at his disposal any time.

The memory card 102 comprises a memory 106 and a microcontroller 108 integrated into a housing. The housing may be small enough so that the owner can carry the memory card 102 easily and that the memory card 102 can be used in connection with card readers, which are integrated into small devices, such as, mobile communication devices. Preferably, the memory card 102 is configured according to a standard format, and may be an SD card, a CF card, a MMC or the like. Another example of a memory card format in the sense of this disclosure is a USB flash memory device. The standard format may particularly specify the size and shape of the memory card 102, the configuration of its electric contacts and/or the communication protocols used in the communication with the memory card 102. The standard compliance of the memory card 102 allows the card to be accessed by means of card reader devices, which are likewise compliant with the standard.

The memory 106 is a non-volatile storage that can be electrically erased and reprogrammed. Particularly, the memory 106 may be configured as a solid state storage unit, particularly as flash memory or as non-flash EEPROM (Electrically Erasable Programmable Read-Only Memory). However, the person skilled in the art understands that in principle any sort of memory unit may be used. The memory 106 may be constituted by one or more memory chips, which are arranged in the housing of the memory card 102.

The microcontroller 108 and the memory 106 may reside on one single chip within the memory card 102 or the microcontroller 108 may be a separate chip connected to the memory 106. The microcontroller 108 provides functionality for accessing the memory 106 by means of devices to which the memory card 102 is connected. In particular, the microcontroller 108 implements the communication protocols used for the data exchange between the memory card 102 and a connected device.

In the system depicted in figure 1, the memory card 102 is used with the host device 110. In one embodiment the host device 110 is a mobile communication device, such as, for example, a cellular phone, a PDA (Personal Data Assistant) or the like. The host device 110 comprises a microprocessor controlling the operation of the host device 110. The microprocessor is coupled to a memory unit that stores software programs that can be run on the microprocessor and data used in the operation of the host device 110. A user may operate the host device 110 using an input unit, such as, for example, a keypad, and a display unit, such as, for example, a monitor. The input unit and the display unit are also coupled to the microprocessor.

Furthermore, the host device 110 may comprise a radio module, which is not shown in figure 1, the radio module allowing connecting the host device 110 to a mobile communication network via a radio access network. For instance, the mobile communication network may be a GSM or a UMTS network.

In particular if the host device 110 is configured as a mobile communication device, a smartcard 112 is inserted into the host device 110. For receiving the smartcard 112, the host device 110 may comprise a card reader that is not depicted in figure 1. The smartcard 112 comprises a microcontroller providing a secure environment for the execution of applications and the storage of data. Particularly, this means that unauthorized access to data and processes is prevented due to the hardware design of the microcontroller and due to cryptographic mechanisms used for managing data in the microcontroller. Moreover, the smartcard 112 is physically protected against manipulations, such as, power analysis, reverse engineering etc.

Accessing the functions of the smartcard 112 and data stored therein requires that the smartcard 112 authenticates the user of the host device 110. The user authentication is performed using a secret credential allocated to the user, which is entered at the host device 110 and passed to the smartcard 112. In the smartcard 112, the credential is checked by a security mechanism, which unlocks the functions and data after having successfully verified the credential. Furthermore, it may be provided that all or some of the functions of the host device 110 are protected and have to be unlocked by the smartcard 112. The smartcard 112 may unlock these functions after having successfully verified the credential.

Preferably, the smartcard 112 is used in conjunction with a utilization of the host device 110 in the mobile communication network. In particular, the smartcard 112 may comprises an application, which provides identification and authenticating services to the mobile communication network. If the mobile communication network is a GSM network, the smartcard 112 is configured as a SIM card according to the GSM standard comprising a SIM application, which provides the identification and authentication service. If the mobile communication network is a UMTS network, the smartcard 112 is configured as a UICC (Universal Integrated Circuit Card) comprising a USIM application providing the identification and authentication service.

In the following, the smartcard 112 is referred to as SIM card. However, the term SIM card, as used herein, is to be understood as including also smartcards 112 comprising USIM applications or corresponding applications providing authentication and/or identification functions in connection with a mobile communication network.

For using the host device 110 in connection with the memory card 102, the host device 110 further comprises an interface component 128 for connecting the memory card 102 to the host device 110. The interface component 128 is coupled to the microprocessor of the host device 110 thereby allowing the microprocessor to access the memory card 102. The interface component 128 may be a built-in component of the host device 110, as it is depicted in figure 1, or it is separated from the host device 110 and connected to the host device 110 via a data link.

In one embodiment, the interface component 128 is a card reader unit, which is adapted to a certain memory card format in such a way that it is able to receive the memory card 102. In a further embodiment, the memory card 102 may provide wireless connectivity via a radio interface or an optical interface. Here, the interface component 128 may be configured as a corresponding wireless communication interface allowing establishing a radio connection or an optical connection between the host device 110 and the memory card 102. The radio connection may be Bluetooth connection or a short range radio connection, such as, for example, an NFC (Near Field Communication) or a ZigBee connection, and the optical connection may be an infrared (IR) connection, for example.

In particular, the host device 110 is used in the system depicted in figure 1 for providing data stored in the memory card 102 to the user device 114. The memory card 102 may be used as storage of the host device 110 in addition to the integrated memory unit of the host device 110.

In particular, the memory card 102 may store data that are used in the host device 110, such as for example audio or video files or digital pictures. For instance, the digital pictures may be taken by means of the host device 110, if the host device 110 disposes of a digital camera. This is usually the case, if the host device 110 is a mobile communication device, such as, a cellular phone or a PDA, since such devices usually comprise an integrated digital camera. Audio and/or video files may be downloaded to the host device 110 via the mobile communication network, for example. Such networks often provide services for downloading audio and/or video data.

In the aforementioned scenarios, the memory card 102 may serve as optional memory extension, as it is often provided with host devices 110, such as mobile communication devices. Here, the memory card 102 may be connected to the host device 110 essentially permanently. However, the user may also temporarily disconnect the memory card 102 from the host device 110 in order to copy data from a certain data source to the memory card 102.

Although in figure 1 only one memory card 102 is depicted, the user may dispose of multiple memory cards 102 of the aforementioned type. The user may use the memory cards 102 with the same host device 110. For instance, the user may replace one memory card 102 with another memory card 102, in case the data content has reached the full capacity of the first memory card 102. Likewise, the user may of course also have other reasons to use multiple memory cards 102 with one host device 110. Furthermore, more than one host device 110 may be used. One user may have two or more host devices 110 or more than one user may dispose of a host device 110, which is connectable to the user device 114. Each host device 110 may be used together with one or more memory cards 102.

The user device 114 is a further device of the system depicted in figure 1 in which a user wants to have the data stored in the memory cards 102 available.

For instance, the users want to use the data not only in the host devices 110 but also in the user device 114 and/or the users want to backup the data in the user device 114.

In one embodiment, the user device 114 is a PC, such as, for example a home PC of the user or a PC at his place of work. In particular, the user device 114 may comprise a programmable microprocessor and a memory for storing software programs that can be executed by the microprocessor and for storing data. The user device 114 may comprise a display unit, such as, for example, a monitor, to present information, and the user may operate the user device 114 by means of an input unit, such as, for example a keyboard.

Between each host device 110 and the user device 114 a data connection 116 can be established via at least one communication channel. In different embodiments of the system, the data connection 116 may be a wired connection or a wireless connection, for example. The wired connection may be a serial connection or a USB (Universal Serial Bus) connection. For wirelessly connecting the host device 110 and the user device 114 a radio link may be established. For instance, the radio link may be a Bluetooth connection based on the Bluetooth standard, which is known to a person skilled in the art. Other communication channels, which may be used for wirelessly connecting the host device 110 and the user device 114, are radio connections based on a short range radio technology, such as, for example the NFC technology or the ZigBee technology. Likewise, the devices 110, 114 may be connected via an optical data connection 116, such as, for example, an infrared (IR) connection. As a further alternative, the data connection 116 may also be established via a data network to which the devices 110, 114 are connected. For instance, the data network may be a local area network to which the host device 110 may be connected wirelessly using a WLAN (Wireless Local Area Network) link. Furthermore, the host device 110 and the user device 114 may be connected to each other via a wide area network. In particular, the network connection may be established via a mobile telecommunications network to which the host device 110 is connectable. The mobile communication network may provide a gateway to an IP (Internet protocol) network, particularly to the Internet, to which the user device 114 may be connected so that the host device 110 and the user device 114 can be connected to each other via the mobile communication network and the IP network.

For establishing the data connection 116, the host device 110 and the user device 114 comprise connection interfaces 118, 120. The connection interfaces 118, 120 are configured according to the communication channel, which is provided for the data transfer, and allow for sending and receiving data via this communication channel.

In embodiments of the invention, there may exist multiple data connections 116 between the host device 110 and the user device 114. Here, each of the devices 110, 114 may comprise multiple connection interfaces 118, 120 so that multiple communication channels are available for the data transfer. For instance, the host device 110 may be connected to the user device 114 via a local radio connection and, at the same time, it is possible to transfer data from the host device 110 to the user device 114 via the mobile communication network. Each data connection 116, which can be established, is registered in the host device 110. For this purpose, the host device 110 stores configuration data, which particularly specify the possible data connections 116.

For transferring data stored in the memory card 102 to the user device 114, the host device 110 comprises a sending component 122, which is configured to transmit data stored in the memory card 102 and/or information identifying data stored in the memory card 102 to the user device 114 via one available data connection 116. The sending component 122 is coupled to a managing unit 124, which controls the data transfer. The sending component 122 and the managing unit 124 may be configured as software applications, which are executed in the microprocessor of the host device 110. The user device 114 comprises a receiving component 126, which receives the data transferred from the host device 110 to the user device 114 and which stores the received data in the memory of the user device 114. Similar to the sending component 122 and the managing unit 124 of the host device 110, the receiving component 126 may be configured as a software application executed by the microprocessor of the user device 114.

The information identifying data stored in the memory card 102 may be a file index concerning data files stored in the memory card 102. The file index may specify names of files stored in the memory card 102. In addition, the types of the files and/or other information relating to the files may be specified in the index. The type of file is typically indicated by a file name extension, which is indicative of a file type and/or a file format.

Before files stored in the memory card 102 or a file index is transferred to the user device 114, the managing unit 124 of the host device 110 determines the files, which have not been transferred to the user device 114 yet or the files that have not been specified in a file index already sent to the user device 114. For this purpose, the managing unit 124 may mark the files, which have been transferred to the user device 114. If the transmission of a file index is provided, the managing unit 124 may additionally mark a file, when it has been specified in an index transferred to the user device 114. The markings may comprise a code, which may be incorporated into a file name of the file by renaming the file in the memory card 102. As an alternative the files may comprise so-called meta data, in which the code can be incorporated. Meta data are information appended to a file in addition to the use data contained in the file.

In an alternative embodiment, the managing unit 124 may keep a register indicating, which files have been transferred to the user device 114 and which files have been specified in an index transferred to the user device 114. Moreover, in one embodiment, the register may identify files that have been modified or deleted after they have been transferred to the user device 114. In the register, the files may be identified using the file names. However, the files names may not be unique. Therefore, further data like the size and/or the creation date may be used in addition to identify a file. Alternatively, a unique identification code may be assigned to the files and used for identifying the files in the register. The identification codes may be also be attached to a file by adding them to the meta data of the files.

In order to be able to allocate the register to a memory card 102, the memory card 102 is identified in the register. This may be done using an identification code of the memory card 102, which is specified in the register and which is also stored in the memory card 102. The register is included in a file or database, which may be stored in the host device 110. In one embodiment, the register is particularly stored in the SIM card 112 inserted into the host device 110. This has the advantage that the register can be made available in another host device 110 by inserting the SIM card 112 into the other host device 110. Thus, if the user replaces the host device 110 with a new one that is operated with the same SIM card 112, the register is directly available in the new host device 110. If multiple memory cards 102 are used with one host device 110, one register is kept for each memory card 102. The registers allocated to different memory cards 102 may be stored in one file or database or in a plurality of files or databases.

As an alternative, the register may also be stored in the memory card 102 concerned and the host device 110 may read the register, when the memory card 102 is connected to the host device 110. Storing the register in the memory card 102 is particularly useful, if the memory card 102 is used with different host devices 110, since the register is available in each of the host devices 110.

One memory card 102 may also be used in connection with multiple host devices 114. In this case, one register of the type described may be provided for each user device. In the different registers the user devices 114 may be identified using unique identification codes of the user devices 114. Here, the host device 110 may request the identification code from the user device 114 in order to select the register allocated to the user device 114, before transferring data to the user device.

In one embodiment, the transfer of the data or the index is time-controlled. In this embodiment, the transfer is initiated once in a predetermined time interval, such as a day or a week. Furthermore, a predetermined point in time may be specified. This may be a predetermined time of the day, if a daily data transfer is provided or a predetermined time of a specific day of week, if the data is to be transferred weekly. The time for the transfer may be specified by the user of the host device 110 and may be stored in the configuration data.

In addition to the time of the transfer, one or more communication channels may be specified for the data transfer. When data or indices are to be transferred, the managing unit 124 checks, whether at least one specified communication channel is available. If the managing unit 124 determines that exactly one specified communication channel is available, it instructs the sending component 122 to use the communication channel for transferring the data or index. If more than one communication channel is specified, an order of the communication channels may also be given. If the managing unit 124 determines that at least two specified communication channels are available, it selects the communication channel available with the highest order and instructs the sending component 122 to send the data via this communication channel. The order can be defined by user of the host device 110 and may be stored in the configuration data.

In another embodiment, at least one communication channel is specified in the configuration data and the managing unit 124 monitors, whether at least one of the specified communication channels is available. If the managing unit 124 determines that exactly one specified communication channel is available, it initiates the transfer of data or an index to the user device 114 via this communication channel. If more than one communication channel is specified, an order may of the communication channels may be given again. If the managing unit 124 determines that at least two specified communication channels are available, it selects the communication channel available with the highest order and initiates the transfer of data or an index to the user device 114 via this communication channel.

In this embodiment, the user may specify a direct radio connection as the communication for the transfer, for example. Then, the managing unit 124 initiates the transfer, when it determines that the radio connection is available. Thus, the transfer can be initiated automatically, when the host device 110 is brought into a distance from the user device 114, which is in the range of the radio connection. Here, the automatic initiation of the transfer requires that the connection interface 118 of the host device 110 and the corresponding connection interface 120 of the user device 114 are active.

Furthermore, it may likewise be provided that the transfer is initiated by the user. This may be done by operating the input unit of the host device 110 or the input unit of the user device 114 in a predetermined way. If the data transfer is initiated manually by the user, one predetermined communication channel may be used for the transfer or multiple communication channels may be specified together with an order. In the latter case, the managing unit 124 select the communication channel according to the assigned order, if at least two specified communication channels are available. If only one specified communication channel is available, this communication channel is used for the data transfer.

Upon the initiation of the data transfer, the managing unit 124 checks, whether the memory card 102 connected to the host device 110 includes added data, i.e. data, which have not been transferred to the user device 114 yet. In case the files that have been transferred to the user device 114 are marked, the managing unit 124 checks, whether there are unmarked files stored in the memory card 102. If the managing unit 124 determines that there are unmarked files, it selects the unmarked files for the transfer. If a register identifying the already sent data is kept, the managing unit 124 firstly determines the register allocated to the memory card 102 connected to the host device 110 as described before. Then, the managing unit 124 compares the files identified in the register allocated to the memory card 102 with the files stored in the memory card 102. If the managing unit 124 determines as the result of the comparison that there are files stored in the memory card 102, which are not identified in the register, it selects these files for the data transfer.

If files stored in the memory card 102 have been modified after they have been transferred to the user device 114, the files may also be selected for the data transfer. Here, the files already stored in the user device 114 may be overwritten by the modified files. In another embodiment, the modified filed may be stored in the user device 114 using a modified file name, which indicates that the files have been modified. The modification of the file name may be done by the managing unit 124 before transferring the data. Whether the files already stored in the user device 114 are overwritten or not, may be defined in configuration data stored in the host device 110. In another embodiment, the user may choose between the two options for each individual modified file. This may be done using a user interface presented at the host device 110 or the user device 114.

If files stored in the memory card 102 have been deleted after they have been transferred to the user device, the files may also be deleted in the user device 114 or they may be maintained in the user device 114. If the files are to be deleted the managing unit 124 may generated a request for deleting the files, which is transferred to the user device 114 instead of the files. In the request, the files to the deleted may be identified using the identification code allocated to the files, the file name and/or the file size. Whether the files are deleted or maintained in the user device 144 may again be defined in configuration data stored in the host device 110. In another embodiment, the user may again choose between the two options for each individual modified file. This may be done using a user interface presented at the host device 110 or the user device 114.

After the files to be transferred have been selected, the managing unit 124 may instruct the sending component 122 to send these files to the user device 114 via the data connection 116. In alternative embodiment, priorities may be assigned to data to be transferred via the data connection 116. Here, the files stored in the memory card 102, which are to be transferred to the user device 114, may be assigned a lower priority. Thus they are sent only, if no other data having a higher priority are to be sent. Moreover, the transfer of the data stored in the memory card 102 may be interrupted, when other data having a higher priority are to be sent via the data connection 116. The data transfer based on the priorities assigned to the data to be sent may be controlled by the connection interface 118 of the host device 110. In this case, the managing unit 124 or the sending component 122 only assigns the lower priority to the data read stored in the memory card 102 that are to be sent to the user device 114. Alternatively, the managing unit 124 may monitor the data traffic of the data connection 116 and may instruct the sending component 122 to transmit the data, if the managing unit 124 determines that no other data are to be transferred via the data connection 116 or that other data to be transferred via the data connection 116 have lower priority than the data stored in the memory card 102.

In an alternative embodiment, the managing unit 124 generates an index of the selected files to be transferred, after the files have been selected. As described before, the index may specify the names of the files to be transferred. In addition, the types of the files and/or other information relating to the files may be specified in the index. After having generated the index, the managing unit 124 may instruct the sending component 122 to send the index to the user device 114. Moreover, it may mark the files stored in the smartcard 112 as being identified in an index or it may add the files to the register allocated to the memory card 102 together with an indication that they are identified in an index.

If the files are identified in the register using an identification code, the identification code may also be added to the file stored in the memory card 102. In principle, the registration of the files identified in an index can be dispensed with. However, it allows for resuming a transfer after a possible interruption without sending the index again.

In the user device 114, the receiving component 126 receives the index and the index may be presented at the display unit of the user device 114. For instance, in the user device 114 all files, which are stored in the user device 114 and which have been received from the host device 110 may be reviewed using a file browser. When files have not been transferred to the user device 114, but an index identifying the files has been received, the file specified in the index may be added to the file browser together with an indication that they have not been received in the user device 114 yet.

After the index has been sent to the user device 114, the files themselves may be transmitted to the user device 114 if there is low data traffic on the data connection 116. Here, the transmission is made with a lower priority than other data to be transferred via the data connection 116 as described before. However, the user device 114 may request one or more specific files indicated in the index. In this case, the requested files are transferred to the user device 114 with higher priority. The user device 114 may request a file, when it is to be used in the user device 114 essentially immediately, in particular when the user wants to open the file by means of the user device 114.

After the files have been sent to the user device 114, the managing unit 124 marks the files stored in the memory card 102 as having been transferred to the user device 114. If a register identifying the files sent to the user device 114 is provided, the managing unit 124 records the transmission of the files in the register. For this purpose, the managing unit 124 may add to the register items an indication that the files have been transmitted to the user device 114, if the register items have already been generated in connection with the transmission of an index. Otherwise, the managing unit 124 generates corresponding register items. In addition, the managing unit 124 adds identification codes to the files, if the files are identified in the register using such codes.

If identification codes are used for identifying the files in the register and the identification code has not been added to the files before, the managing unit 124 also adds the identification codes to the files.

In the user device 114, the receiving component 126 receives the files and stores them in the memory of the user device 114. In one embodiment, the managing unit 124 adds to the files an indication of the memory card 102 in which the files are stored. The indication may be introduced into the meta data of the files or may be added to the file name. Alternatively, the indication may be transmitted in addition to files. The receiving component 126 may access this indication and store the files according to the memory card 102. Here, different file folders may be provided for different memory cards 102. This allows the user of the user device 114 to identify the memory card 102 from which the files originate. If the indication is attached to the file in the meta data or in the file name, those folders can also be dispensed with, since the source memory card 102 can be identified by inspecting the file. If multiple host devices 110 are used with one user device 114, the host device 110, which sends the files to the user device 114, may likewise be indicated similarly as the memory card 102.

In one embodiment, the data transferred from the host device 110 to the user device 114 is encrypted in order to ensure a secure data transfer. The encryption may be made in the host device 110 using an encryption key, which is securely stored in the host device 110. In particular, the encryption key may be securely stored in the SIM card 112. The encryption of the data may be made in the sending component 122. As an alternative, the SIM card 112 may encrypt the data using cryptographic functions implemented in the SIM card 112. In addition, a digital signature may be generated using the encryption key and may be transmitted to the user device 114 to allow the user device 114 for checking the data integrity.

In the user device 114, the receiving component 126 decrypts the data using a decryption key stored in the user device 114. Then, the data are stored in the user device 114. If a digital signature is transmitted from the host device 110 to the user device 114, the user receiving component checks the digital signature and stores the data, if the digital signature has been verified successfully.

If it is provided to send an index to the user device 114, the transmission of the index may be secured in the same way, i.e. the index may be transferred encryptedly and a signature may optionally be added.

In one embodiment, symmetric encryption may be used. This means that the decryption key corresponds to the encryption key. In another embodiment the encryption key and the decryption key may form an asymmetric key pair.

In a further optional embodiment, the memory 106 of at least one of the used memory cards 102 is protected against unauthorized access, i.e. the unauthorized reading, writing and manipulating of data stored in the memory card 102. This allows the user to securely store personal and/or sensitive data in the memory card 102, which are only provided for personal use or for sharing with selected other persons. For protecting the memory 106 of the memory card 102, the microcontroller 108 of the memory card 102 may provide a security logic controlling access to the memory 106. The security logic of the microcontroller 108 permits accessing the memory 106 only after a credential has been provided and successfully verified. The credential may be code, such as a password or a PIN (Personal Identification Number), or a digital signature, for example.

The credentials, which are necessary for accessing the memory 106 of the memory cards 102 used with a host device 110, may be securely stored in the host device 110. Particularly, the SIM card 112 may store the credentials so that they are protected against unauthorised access by the security mechanism of the SIM card 112. If more than one memory card 102 is used together with the host device 110, the credentials allocated to the memory cards 102 are stored in the SIM card 112 together with the identification codes allocated to the memory cards 102.

The credentials stored in the SIM card 112 are used for accessing the protected memory cards 102 used with the host device 110. In particular, this means that the managing unit 124 requests the SIM card 112 to provide the credential allocated to a memory card 102, when the managing unit 124 accesses the memory card 102. The credential is passed to the memory card 102 and the microcontroller 108 of the memory card 102 checks the credential. After the microcontroller 108 of the memory card 102 has verified the credential successfully, it grants access to the memory 106 of the memory card 102. Then, the managing unit 124 access the memory card 102 as described before in order to send data stored in the memory card 102 to the user device 114.

In another embodiment, data stored in a memory card 102 may not be protected by a security mechanism of the microcontroller 108 of the memory card 102, but data is stored in the memory card 102 in encrypted form in order to prevent that unauthorised third parties can read the data without permission.

For accessing the encrypted data stored in the memory card 102, the host device 110 may provide a crypto component, which is coupled to the managing unit 124. The crypto component may likewise be configured as a software application, which may be run on the microprocessor 110 of the host device 110. In a further embodiment, the application is run on the SIM card 112 so that functionality for decrypting the data is provided by the SIM card 112.

The crypto component communicates with the memory card 102 and reads data from the memory card 102. If the read data are encrypted, the crypto component decrypts the data using a decryption key that is securely stored in the host device 110. Preferably, only this decryption key allows for decrypting the data, and it is ensured that no copy of the decryption key exists external to the host device 110. This guarantees that the data can only be accessed by means of the host device 110 of the card owner so that the data are reliably secured against unauthorised access. The decryption key for decrypting the encrypted data stored in the memory card 102 is preferably stored in the SIM card 112 of the host device 110. In this case, the security mechanism of the SIM card 112 protects the decryption key from being accessed by third parties.

The crypto component may also provide functionality for encrypting data and for storing the encrypted data in the memory card 102. When data to be encrypted are present in the host device 110, either after the data have been generated in the host device 110 or after they have been transmitted to the host device 110, the crypto component may encrypt the data and control the transmission of the encrypted data to the memory card 102. After having stored the data in the memory card 102 in encrypted form, unencrypted copies of the data stored in the host device 110 may be deleted. The selection of the data that is encrypted and stored in the memory card 102 may be made by the user of the host device 110 using the input unit of the host device 110.

The data may encrypted using an encryption key that is stored in the host device 110. In one embodiment, symmetric encryption is applied. This means that encryption and decryption is made using the same key. In this embodiment, the data are encrypted using the cryptographic key, which is securely stored in the SIM card 112 or host device 110 and which is also used for decrypting the data. Here, the data can only be encrypted using the crypto component of the host device 110 or the SIM card 112. When data from further devices are to be encrypted, these data are provided to the host device 110, as described before, and the crypto component encrypts the data and stores them in the memory card 102.

In further embodiments, asymmetric encryption is applied. Here, a key pair is provided comprising an encryption key and an allocated decryption key, which is different from the encryption key. The encryption key is used for encrypting the data, while the decryption key is used for decrypting the data. When asymmetric encryption is used, the encryption key may also be securely stored in the SIM card 112 and kept secret to other persons. Thus, the encryption of the data and the storage of the encrypted data in the memory card 102 are exclusively done using the crypto component of the host device 110 or the SIM card 112, similar to the embodiment in which symmetric encryption is used.

The names of the files stored in the memory card 102 and the meta data of the files may not be encrypted. In this case, the managing unit 124 may select the files to be transferred to the user device 114 without involving the crypto component. Likewise, the index of the files can be transmitted to the user device 114 without utilisation of the crypto component. However, if an encryption of the file names and/or the meta data is provided, the managing unit 124 accesses the data stored in the memory card 102 via the crypto component, when selecting the files to be transferred and when generating the index. Moreover, for marking the files and/or for attaching identification codes the managing unit 124 may use the crypto component.

The files, which are transferred to the user device 114, are preferably unencrypted so that they can be accessed without using the decryption key stored in the host device 110. Thus, when transferring the files to the user device 114, the managing unit 124 instructs the crypto component to decrypt the files. The decrypted files are then passed to the sending component 122, which sends the files to the user device 114 as described before.

If the data are transferred to the user device 114 in encrypted form, this encryption preferably differs from the encryption of the data stored in the memory card. Particularly, different keys may be used to increase security. This means that the data are decrypted first in the crypto component before they are sent to the user device 114. Then, they are encrypted again as described before in order to sent them to the user device 114. Each encryption is made using another key.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage.

Any reference signs in the claims should not be construed as limiting the scope.

## Claims

1. A method for providing data stored in at least one memory card (102) to a user device (114), said method comprising the following steps:
- connecting the memory card (102) to a host unit (110), which is connectable to the user device (114);
- determining in the host unit (110) that added data is stored in the memory card (102), said added data have not been transmitted to the user device (114); and
- transmitting the added data and/or information identifying the added data from the host unit (110) to the user device (114), if a data connection (116) between the user device (114) and the host unit (110) exists.

2. The method according to claim 1, wherein at least one register is provided, said register identifying data that have been transmitted to the user device (114).

3. The method according to claim 2, wherein it is determined that data stored in the memory card (102) are added data, if said data is not identified in the register.

4. The method according to claim 2 or 3, wherein the register is stored in the host unit (110).

5. The method according to claim 2 or 3, wherein the register is stored in the memory card (102).

6. The method according to one of the preceding claims, wherein the added data and/or information identifying the added data is transmitted to the user device (114), when it is realised that the data connection (116) exists.

7. The method according to one the preceding claims, wherein added data and/or information identifying added data is transmitted to the user device (114) periodically.

8. The method according to one of the preceding claims, wherein the information identifying the added data is transmitted to the user device (114) at a first time and the added data is transferred to the user device (114) at a second time later than the first time.

9. The method according to one of the preceding claims, wherein the added data is transmitted via the data connection (116) with a lower priority than further data transmitted via the data connection (116).

10. The method according to one of the preceding claims, wherein the added data is transmitted to the user device (114) upon a receipt of a request in the host unit (110).

11. The method according to claim 10, wherein the added data is transmitted to the user device (114) with a priority that is equal to or higher than the priority of other data transferred via the data connection (116).

12. The method according to one of the preceding claims, wherein the memory card (102) allows the host unit (110) to read the added data and/or the information identifying the data after a credential has been successfully verified in the memory card (102), the credential being provided to the memory card (102) by the host unit (110).

13. The method according to one of the preceding claims, wherein at least part of the added data is stored in the memory card (102) in an encrypted form, and wherein the encrypted part of the added data is decrypted before it is transmitted to the user device (114), the decryption being made using a decryption key securely stored in the host unit (110).

14. A system for providing data stored in least one memory card (102) to a user device (114), said system comprising:
- a host unit (110) coupled to an interface means (128), said interface means being adapted to connect the host unit (110) to the memory card (102);
- a managing unit (124) included in the host unit (110), the managing unit (124) being adapted to determine that added data is stored in the memory card (102), said added data have not been transmitted to the user device (114); and
- the managing unit (124) being further adapted to transmit the added data and/or information identifying the added data to the user device (114), if a data connection (116) between the user device (114) and the host unit (110) exists.
